# FASCICULE DE BREVET EUROPEEN

(11) **EP 1 250 077 B1**
(45) Date de publication et mention de la délivrance du brevet: **06.08.2003**
(21) Numéro de dépôt: 00990844.3
(22) Date de dépôt: 29.12.2000
(51) Int. Cl.: A47J 31/40

(54) **GROUPE POUR LA FABRICATION DE BOISSONS PAR INFUSION ET MACHINE L'INT GRANT**
GRUPPE ZUM ZUBEREITEN VON INFUSIONSGETRÄNKEN UND MASCHINE MIT EINER SOLCHEN GRUPPE
UNIT FOR MAKING BEVERAGES BY BREWING AND MACHINE INCORPORATING SAME

(30) Priorité: 24.01.2000 FR 0000880
(43) Date de publication de la demande: 23.10.2002
(73) Titulaire: Unic S.A., 06510 Carros (FR)
(72) Inventeur: Levi, Mario Off. Méditer. de Bre. d'Inv. et de Mar, 06000 Nice (FR); Levi, Jean-Pierre Off.Méd.de Brev.d'Inv.et de Mar, 06000 Nice (FR)
(74) Mandataire: Hautier, Jean-Louis
(86) Numéro de dépôt international: FR0003734
(87) Numéro de publication internationale: WO01054550

(56) Documents cités:
- CH-A- 674 703
- DE-A- 1 918 425
- US-A- 3 537 383
- US-A- 4 829 889

## Description

La présente invention concerne un groupe pour la fabrication de boissons par infusion d'une dose d'un produit à infuser.

Elle concerne aussi une machine automatique pour la fabrication de boissons au café du type expresso, cette machine intégrant le groupe présenté selon l'invention.

Selon l'invention, le groupe comporte plusieurs chambres d'infusion dotées chacune d'un réceptacle pour la dose et des moyens d'injection d'eau chaude dans chacune des chambres d'infusion.

L'invention trouvera particulièrement son application dans le domaine de la fabrication de boissons au café du type expresso.

Elle pourra permettre la réalisation et l'utilisation d'une machine automatique d'un usage très pratique et d'une grande productivité.

On connaît déjà des groupes automatiques pour la fabrication de café express.

Dans ce cadre, le document ER-A-0.450.200 divulgue un groupe automatique pour café express qui comprend une chambre de pression pour la préparation du café, cette chambre de pression comprenant un élément de fermeture-ouverture pour l'introduction et l'élimination de la poudre de café et au moins une paroi mobile réglable définissant le volume de la chambre.

Selon ce document, la chambre d'infusion unique est fermée en partie haute par un élément pivotant et en partie basse par un piston mobile.

L'élément pivotant peut adopter une position ouverte pour l'admission ou l'évacuation de la mouture.

Cependant, ce groupe a l'inconvénient de ne permettre la réalisation que d'un seul café ou d'un double café en augmentant la quantité de mouture dans la chambre d'infusion.

Il ne permet pas d'associer plusieurs chambres d'infusion ce qui confère à la machine à café un rendement tout à fait classique c'est-à-dire réalisant une seule opération d'infusion à la fois.

Par ailleurs, ce groupe apparaît de conception coûteuse notamment par la forme du piston mobile et du système de fermeture de la chambre en partie haute.

On connaît également le document EP-A-0.604.350 qui présente une machine à préparer le café qui comprend une paire de réceptacles, qui contiennent une dose de café, une paire de pistons qui compriment ladite dose de café, et une paire d'éjecteurs. La machine permet ainsi de préparer un ou deux cafés en même temps et trois si l'un des réceptacles possède une double capacité et une double sortie. Chaque siège ou base monté pour tourner également avec l'arbre principal possède une cavité dans laquelle est positionné un support destiné à un filtre, que traverse l'infusion de café. L'écart angulaire entre les réceptacles est le même que celui des pistons de compression pour leur permettre d'être en face desdits réceptacles en même temps. Les éjecteurs destinés à la dose de café infusé, sont montés avec le même écart angulaire.

Deux chambres d'infusion peuvent être formées, suivant ce document en doublant tous les moyens essentiels : piston, réceptacle, éjecteur.

Bien qu'elle permette de constituer deux chambres d'infusion, cette machine a l'inconvénient de multiplier le nombre de pièces constitutives nécessaires à cet usage.

Ainsi, tout est formé par paire ce qui est lourd, complexe et coûteux.

Qui plus est, cette machine n'autorise qu'un fonctionnement couplé des chambres d'infusion : si l'on désire les utiliser toutes les deux, elles doivent suivre des cycles simultanés et identiques.

Par conséquent, cette machine n'offre pas de souplesse d'usage.

Les chambres d'infusion ne peuvent en effet pas fonctionner de façon indépendante.

Le document CH-A-674703 divulgue également un appareil à plusieurs chambres d'infusion (cf. préambule de la revendication 1).

Les chambres sont mobiles sur un socle doté d'une pluralité de trous pour l'évacuation de la boisson ou de la mouture usagée, et ce pour chaque chambre.

Les chambres sont mobiles individuellement suivant une organisation complexe ne permettant pas une totale simultanéité de travail ni de réaliser une zone d'évacuation commune de la mouture usagée.

Le document US-A-4829889 montre un mécanisme d'application fort spécifique puisqu'il s'agit de mise en mouvement de cartouches de café moulu. Une pièce rotative dotée de trous est prévue pour déplacer la cartouche entre divers postes. Une seule chambre d'infusion est prévue et le mécanisme a un fonctionnement fortement lié à la structure des cartouches employées.

La présente invention a pour but de pallier les inconvénients des machines automatiques et des groupes actuellement connus.

Pour ce faire, elle présente au moins deux chambres d'infusion qui peuvent être ouvertes ou fermées par un plateau mobile doté d'un orifice.

Par ces moyens, on réalise un groupe comportant plusieurs chambres d'infusion ce qui augmente la productivité.

De plus, cet ensemble unifie la machine afin de ne pas multiplier ses éléments constitutifs par le nombre de chambres d'infusion à réaliser.

On obtient selon l'invention une machine peu complexe et d'un encombrement réduit présentant cependant plusieurs chambres d'infusion.

L'invention a ainsi l'avantage de proposer différents éléments communs aux chambres d'infusion et notamment le plateau mobile ou encore des moyens automatiques de commande qui peuvent être groupés.

Un autre but de l'invention est d'augmenter la souplesse d'usage du groupe en permettant la réalisation aussi bien d'une infusion seule, que de deux simultanées, ou encore en permettant la réalisation d'une infusion pendant le chargement de l'autre chambre ou l'évacuation de la mouture de cette autre chambre.

Par conséquent, la présente invention offre la possibilité de travailler en temps masqué sur plusieurs chambres d'infusion.

On ajoute donc la souplesse à la productivité obtenue.

D'autres buts et avantages apparaîtront au cours de la description qui suit qui n'est cependant pas limitative.

Le groupe pour la fabrication de boissons par infusion d'une dose d'un produit à infuser, comportant plusieurs chambres d'infusion dotées chacune d'un réceptacle pour la dose et des moyens d'injection d'eau chaude dans chacune des chambres d'infusion, est caractérisé par le fait que les chambres d'infusion sont juxtaposées et surmontées d'un plateau mobile muni d'un orifice apte à être placé en regard des chambres d'infusion, permettant l'ouverture ou la fermeture des chambres selon sa position.

Le groupe selon l'invention pourra se présenter selon les modes de réalisation énoncés ci-après :
- il présente un joint d'étanchéité entre chaque chambre d'infusion et le plateau mobile ;
- les moyens d'injection sont constitués de circuits d'alimentation radiale débouchant dans chaque chambre d'infusion ;
- la paroi inférieure du réceptacle est réalisée par un piston mobile en translation entre une position de réception de dose et une position d'éjection de la dose dans l'orifice lorsqu'elle est usagée ;
- l'orifice présente une section de forme identique et de dimensions légèrement supérieures à celles de l'ouverture des chambres d'infusion ;
- le pourtour de l'orifice a une épaisseur au moins égale à la hauteur maximale de la dose usagée éjectée après infusion,
- l'évacuation de la dose usagée éjectée s'effectue par gravité après déplacement du plateau mobile ;
- le plateau est un disque mobile en rotation dans un plan horizontal,
- ledit groupe comprend deux chambres d'infusion positionnées sous le plateau de sorte qu'elles se trouvent sur la trajectoire de l'orifice ;
- qu'il comprend des moyens automatiques de chargement d'une dose de produit à infuser pourvus de :
   - un ensemble d'approvisionnement en produit à infuser débouchant sur au moins un canal d'approvisionnement,
   - un entonnoir apte à recevoir par gravité la dose depuis le ou les canaux d'approvisionnement et dont l'extrémité inférieure débouche au niveau du plateau mobile,
   - des moyens de positionnement de l'entonnoir en regard de l'une ou l'autre des chambres d'infusion, permettant le chargement d'une dose dans l'une ou l'autre des chambres d'infusion lorsque l'orifice est positionné en regard ;
- l'extrémité inférieure de l'entonnoir présente des formes et dimensions sensiblement correspondante à celles de l'ouverture des chambres d'infusion ;
- les moyens de positionnement de l'entonnoir en regard de l'une ou l'autre des chambres d'infusion comportent :
   - une liaison pivot d'axe vertical dotée de moyens de rappel,
   - un ergot d'entraînement fixé sur la paroi extérieure de l'entonnoir coopérant avec une partie annulaire sur le pourtour du plateau mobile pour orienter l'entonnoir suivant l'une des trois positions suivantes :
      - une position au repos lorsque l'ergot d'entraînement s'inscrit dans une échancrure formée sur la partie annulaire, les chambres d'infusion étant disposées symétriquement de part et d'autre de la position de repos ;
      - une position pivoté en regard de l'une des chambres d'infusion par appui de l'ergot d'entraînement sur la portion de la partie annulaire située d'un premier côté de l'échancrure;
      - une position pivoté en regard de l'autre des chambres d'infusion par appui de l'ergot d'entraînement sur la portion de la partie annulaire située de l'autre côté de l'échancrure ;
- il présente des moyens de mise en vibration de l'entonnoir pour favoriser la descente du produit à infuser.
- au moins une zone de chaque portion de la partie annulaire présente un relief pour mettre en vibration l'entonnoir au passage de l'ergot d'entraînement ;
- il comprend des moyens de nettoyage de l'orifice lors de l'évacuation de la dose usagée, constitués :
   - d'un poids dont la section est de même forme et de dimensions peu inférieures à celles de la section de l'orifice,
   - de moyens de suspension du poids autorisant son introduction dans l'orifice et sa sortie.
- les moyens de suspension comportent :
   - une liaison pivot d'axe horizontal,
   - une articulation de descente ou de relevage du poids, permettant l'introduction ou la sortie du poids dans l'orifice lors du déplacement du plateau mobile ;
- le poids a un profil tronconique afin de faciliter ses mouvements d'introduction ou de sortie de l'orifice ;
- le poids est monté sur une tige reliée à liaison pivot d'axe horizontal par une liaison linéaire annulaire, afin de faciliter ses mouvements d'introduction ou de sortie de l'orifice.

L'invention concerne également une machine automatique pour la fabrication de boissons du type expresso intégrant au moins un groupe selon l'invention.

Les dessins ci-joints sont donnés à titre d'exemples indicatifs et non limitatifs. Ils représentent un mode de réalisation préféré selon l'invention. Ils permettront de comprendre aisément l'invention.

La figure 1 est une vue générale en perspective d'un groupe pour la fabrication de boissons selon l'invention dans un mode particulier de réalisation.

La figure 2 est une vue en coupe au niveau des chambres d'infusion issue de la figure 1.

Les figures 3 à 5 sont des vues schématiques de dessus du groupe selon l'invention illustrant trois positions possibles du plateau mobile.

Les figures 6 à 9 sont des vues schématiques en coupe montrant différentes phases de fonctionnement du groupe selon l'invention.

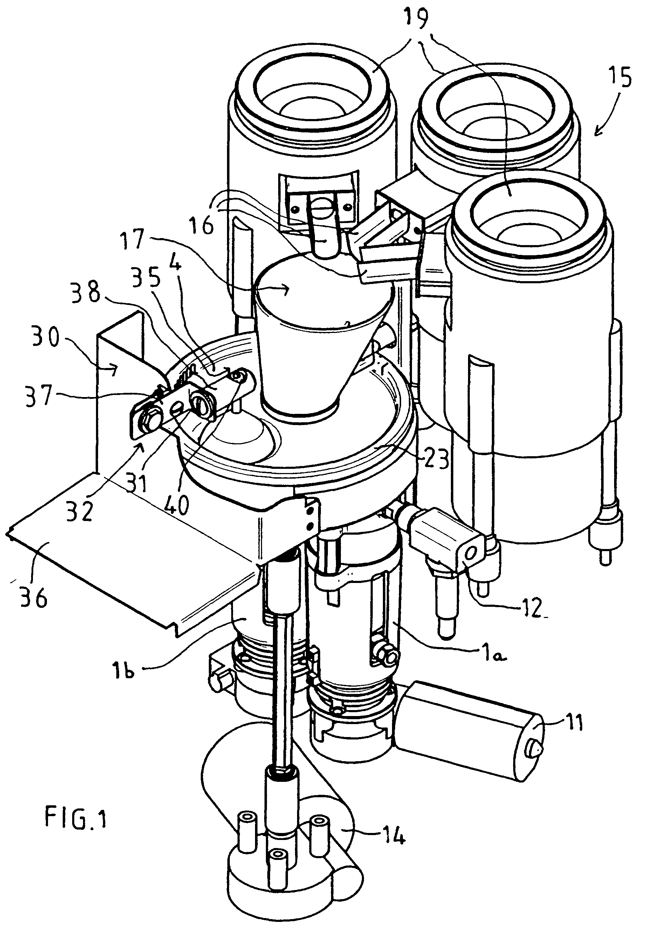

On décrit ci-après un mode de réalisation préféré correspondant à celui illustré aux figures 1 à 9.

Y est présenté un groupe pour la fabrication de boissons qui pourront particulièrement être des cafés du type expresso.

Le groupe selon l'invention comprend plusieurs chambres d'infusion dans lesquelles est réalisée l'infusion d'un produit tel de la mouture de café.

L'ensemble des figures présente le cas de réalisation de deux chambres d'infusion repérées 1a, 1b.

Ces chambres comprennent chacune un réceptacle repéré 2a, 2b aptes à recevoir dans leur volume intérieur une dose 3 du produit à infuser.

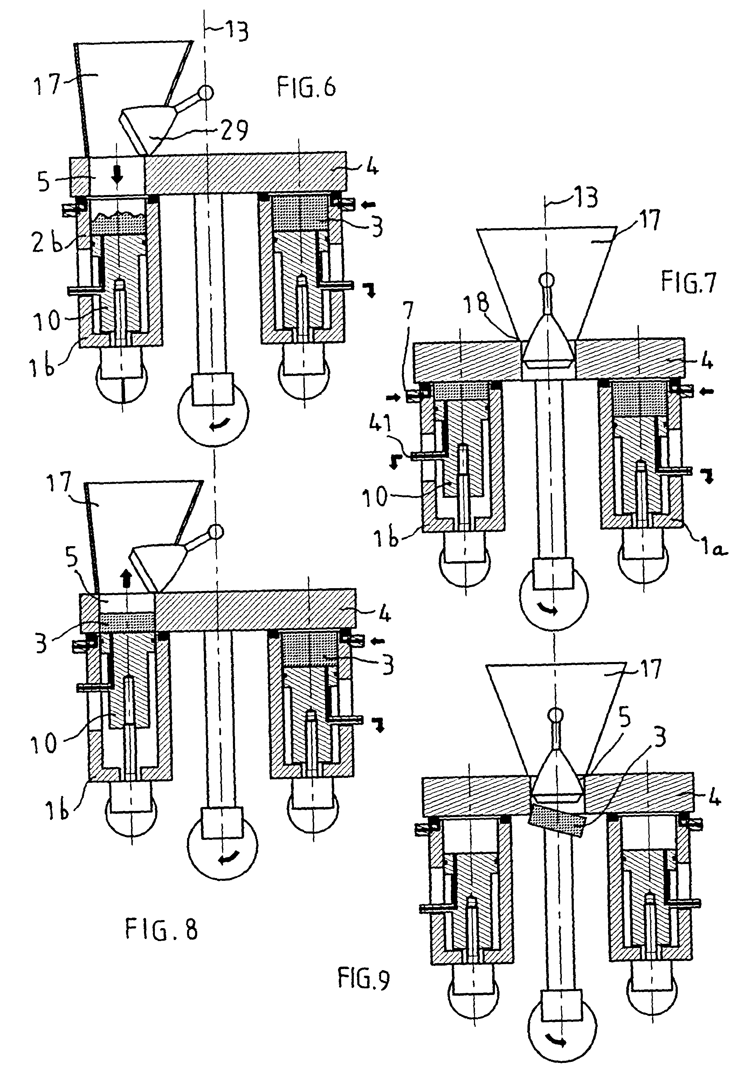

La réception d'une telle dose apparaît notamment à la figure 6.

Des moyens d'injection d'eau chaude permettant la réalisation de l'infusion sont également présents dans chacune des chambres d'infusion 1a, 1b.

On en décrira plus loin un mode de réalisation préféré.

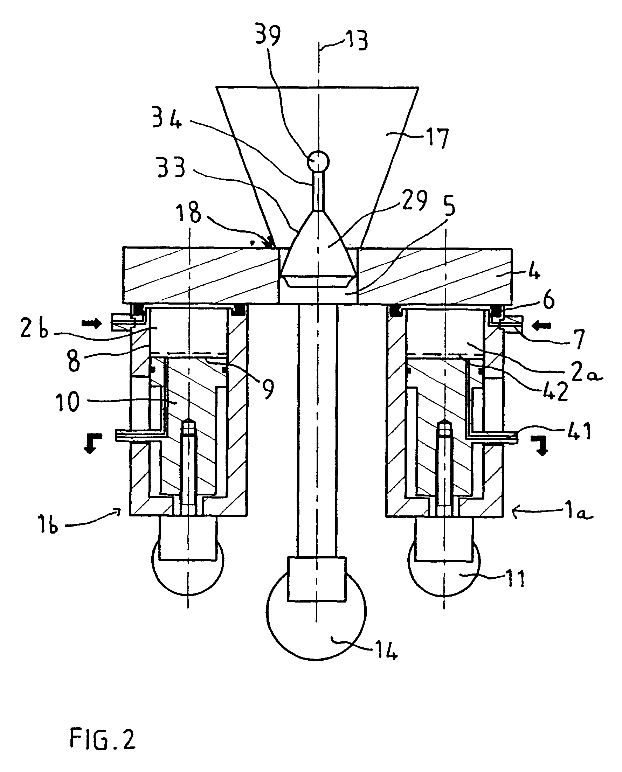

Selon l'invention, les chambres d'infusion 1a, 1b sont juxtaposées telle que cela apparaît en figure 2.

Par ailleurs, elles sont surmontées d'un plateau mobile 4 muni d'un orifice 5.

Suivant la position du plateau mobile 4, l'orifice 5 peut être positionné en regard de l'une des chambres d'infusion la, 1b de façon à l'ouvrir.

Lorsque l'orifice 5 n'est pas positionné au regard d'une chambre d'infusion 1a, 1b, celle-ci est fermée.

La figure 2 présente le cas de deux chambres d'infusion 1a, 1b fermées.

La figure 6 montre une autre possibilité où l'une des chambres 1b est ouverte.

Il apparaît clairement que la formation d'un seul plateau 4 muni d'un orifice 5 assure les phases d'ouverture et de fermeture de toutes les chambres d'infusion 1a, 1b.

Dans le mode de réalisation préféré illustré aux figures 1 à 9, le plateau 4 est mobile en rotation suivant un axe 13 présenté notamment en figure 2.

Cependant, d'autres formes de réalisation sont possibles notamment en conférant une mobilité en translation au plateau 4.

De façon préférée, l'étanchéité de fermeture des chambres d'infusion 1a, 1b est assurée par la formation d'un joint d'étanchéité 6 entre chaque chambre d'infusion 1a, 1b et le plateau mobile 4.

Le joint 6 est notamment présenté en figure 2 sous forme, par exemple, torique.

Toujours en figure 2, apparaissent des moyens d'injection d'eau chaude constitués de circuits d'alimentation radiale 7 débouchant dans chaque chambre d'infusion 1a, 1b.

En amont de ces circuits d'alimentation radiale 7, les moyens d'injection pourront être constitués de façon courante notamment en employant une pompe et un système d'électrovanne d'infusion 12 apparaissant en figure 1.

L'injection radiale de l'eau chaude évite de faire porter tous moyens d'injection par le plateau 4.

Toujours à titre d'exemple préféré, la figure 2 illustre un circuit de sortie de la boisson infusée par le biais d'une sortie repérée 41.

Dans ce cadre, le circuit d'évacuation vers la sortie 41 est formé dans un piston mobile 10 réalisant la paroi inférieure 9 du réceptacle 2a, 2b de chaque chambre d'infusion 1a, 1b.

Préférentiellement, le piston mobile 10 porte un filtre 42 assurant le passage de la boisson vers la sortie 41.

La formation d'un piston mobile 10 en translation permet de faire varier le volume intérieur du réceptacle 2a, 2b.

On peut ainsi l'adapter en fonction de la dose 3 intégrée dans le réceptacle ou encore en fonction du tassage de la mouture souhaitée.

Par ailleurs, la mobilité en translation du piston 6 assure son passage entre une position de réception de la dose 3 et une position d'éjection de la dose 3 dans l'orifice 5 lorsqu'elle est usagée.

En se référant aux figures 6 à 9, on remarque que la chambre 1b de la figure 6 montre la position du piston mobile 10 en réception d'une dose 3.

Selon la figure 7, cette même chambre d'infusion 1b est fermée et le piston mobile 10 relevé de façon à tasser la dose 3.

Après la réalisation de l'infusion, la figure 8 illustre l'éjection de la dose 3 hors du réceptacle 2b par le biais d'un déploiement complet du piston 10.

La dose 3 usagée est ainsi récupérée au niveau du plateau mobile 4 dans l'orifice 5.

De façon préférentielle, l'orifice 5 présente une section dont la forme est identique et les dimensions légèrement supérieures à celles de l'ouverture des chambres d'infusion 1a, 1b.

Dans l'exemple des différentes figures, aussi bien les chambres d'infusion 1a, 1b que l'orifice 5 ont une section circulaire d'un diamètre sensiblement correspondant, à quelques millimètres près.

Non seulement, le plateau mobile 4 participe à l'éjection de la dose 3 hors des chambres d'infusion 1a, 1b, mais aussi il peut permettre l'évacuation hors du groupe de la dose 3 usagée.

Pour ce faire, le pourtour de l'orifice 5 aura une épaisseur au moins égale à la hauteur maximale de la dose 3 usagée éjectée après infusion.

La figure 8 montre parfaitement cette configuration.

Par ailleurs, l'évacuation de la dose 3 usagée ainsi présente dans l'orifice 5 s'effectue par gravité après déplacement du plateau mobile 4 comme cela apparaît en figure 9.

La dose 3 usagée peut ainsi être récupérée dans un réceptacle quelconque.

De façon préférentielle et comme l'illustre les figures, le plateau 4 est un disque mobile en rotation dans un plan horizontal.

Par ailleurs, le groupe comprend préférentiellement deux chambres d'infusion la, 1b positionnées sur le plateau 4.

L'orifice 5 et les chambres d'infusion la, 1b sont placés de telle sorte qu'il se trouve en regard de l'une ou l'autre des chambres 1a, 1b au cours de la rotation de plateau 4.

Cette rotation pourra être assurée autour d'un axe 13 par le biais d'une motorisation 14 constituée de façon courante notamment par le biais d'un motoréducteur et d'un système d'entraînement tel que représenté aux figures 1 et 2.

De même, le déplacement du piston mobile 10 peut être engendré par une motorisation de conception courante repérée 11.

Afin d'assurer une entière automatisation du cycle de fabrication de la boisson, le groupe comprendra un ensemble d'approvisionnement 15 en produits à infuser.

Cet ensemble 15 présenté en figure 1, débouche sur au moins un canal d'approvisionnement 16.

En dessous de ces canaux 16, un entonnoir 17 peut recevoir par gravité la dose 3 de produit à infuser.

Par ailleurs, l'extrémité inférieure 18 de l'entonnoir 17 débouche au niveau du plateau mobile 4 tel que cela apparaît en figure 2. L'entonnoir 17 présenté aux figures à une forme sensiblement évasée à son extrémité supérieure par rapport à son extrémité inférieure 18.

Il s'entend cependant que l'invention ne se limite pas à une telle configuration et, notamment, qu'un entonnoir de section constante sur toute sa hauteur peut être constituée.

Pour assurer le chargement de la dose 3 dans l'une des chambres d'infusion 1a, 1b, il est nécessaire de positionner l'extrémité inférieure 18 en regard de l'une de ces chambres 1a, 1b, et dans le même temps, de placer l'ouverture 5 également en regard.

Pour effectuer l'opération de positionnement de l'entonnoir 17, des moyens de positionnement sont présents.

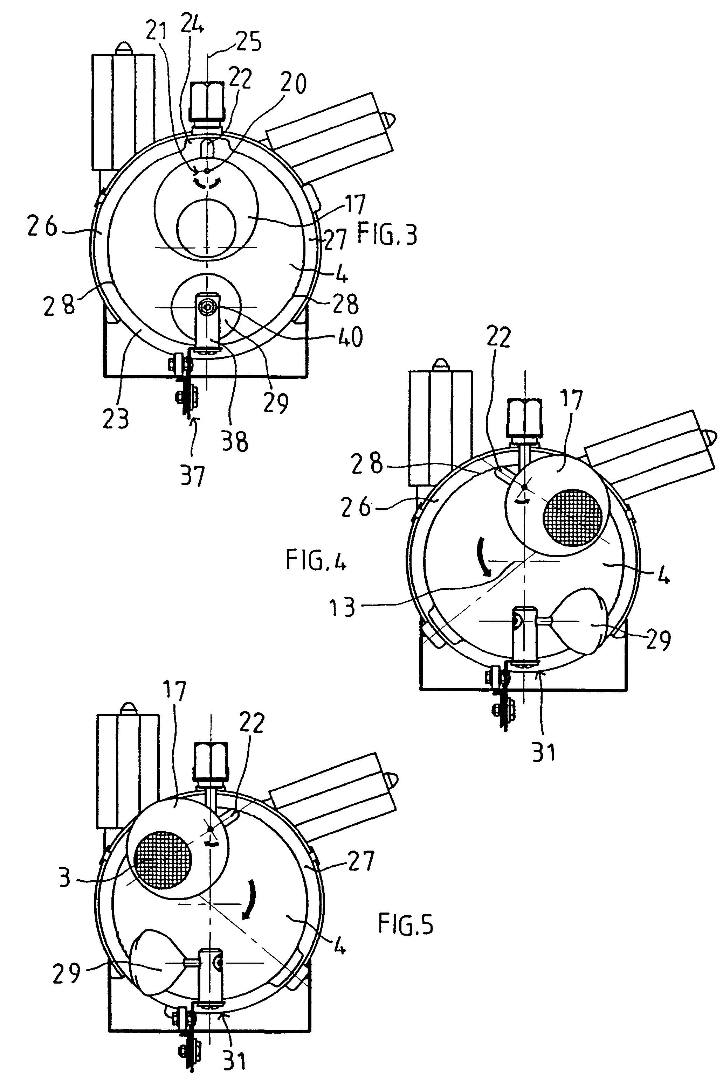

Dans un mode préféré de réalisation, ils comportent une liaison pivot 21 schématisée en figure 3, et dotée d'un axe de rotation repéré 20.

Tel que le montrent les figures 4 et 5, cette liaison pivot 21 assure le passage de l'entonnoir 17 entre une position pivotée à droite et une position pivotée à gauche tout en permettant de présenter une position intermédiaire telle qu'il ressort de la figure 3, entre ces deux positions extrêmes.

Un système d'entraînement de l'entonnoir 17 est présenté afin d'assurer son positionnement dans l'une des trois configurations présentées aux figures 3 à 5.

Dans ce cadre, les moyens de positionnement comportent un ergot d'entraînement repéré 22 fixé sur la paroi extérieure de l'entonnoir 17 et faisant saillie vers l'extérieur du plateau mobile 4.

Par ailleurs, une partie annulaire 23 est constituée sur le pourtour du plateau mobile 4 telle un rebord.

Cette partie annulaire 23 est apte à coopérer avec l'ergot de positionnement 22.

Pour ce faire, la partie annulaire 23 comporte une échancrure 24 dans laquelle peut s'inscrire l'ergot d'entraînement 22 lorsqu'elle est en position de repos comme présenté en figure 3.

Il faut considérer dans cette vue de dessus que les chambres d'infusion 1a, 1b sont formées de façon symétrique autour de cette position de repos selon un axe de symétrie repéré 25.

Lorsque l'on souhaite pivoter à droite l'entonnoir 17 afin d'atteindre la position de la figure 4, le plateau mobile 4 est mis en rotation dans le sens trigonométrique afin que l'ergot d'entraînement 22 s'appuie sur la portion correspondante de la partie annulaire 23.

En l'occurrence, l'ergot d'entraînement 22 s'appuie sur la portion 26 de la partie annulaire 23.

Lorsque l'on souhaite atteindre la position pivotée présentée à la figure 5, l'ergot d'entraînement 22 s'applique sur la portion 27 de la partie annulaire 23 située de l'autre côté de l'échancrure 24.

Là encore, c'est le déplacement du plateau mobile 4 qui assure cette mise en appui.

Elle s'effectue par une rotation dans le sens horaire du plateau mobile 4 depuis la position de repos illustrée à la figure 3.

Conformément à ce qui a été indiqué pour les formes et dimensions de l'orifice 5 et de l'ouverture des chambres d'infusion 1a, 1b, l'extrémité inférieure 18 de l'entonnoir 17 présentera préférentiellement des formes et dimensions sensiblement correspondante à l'ouverture des chambres d'infusion 1a, 1b.

De cette façon, le transfert du produit à infuser s'effectue sans obstacle.

Afin de favoriser la descente du produit à infuser dans l'entonnoir 17 évitant toute rétention du produit sur les parois internes de l'entonnoir 17, le groupe présentera des moyens de mise en vibration de cet entonnoir.

Ces moyens de vibration peuvent notamment être obtenus par la formation d'un relief 28 sur la partie annulaire 23 du plateau mobile 4 tel que cela ressort des figures 3 à 5.

On y voit en effet, la formation d'un relief 28 notamment sous forme de stries sur la paroi verticale interne de la partie annulaire 23.

Par ce relief, l'entonnoir 17 est mis en vibration au passage de l'ergot d'entraînement 22 sur le relief 28.

Dans un autre mode de réalisation, le groupe comprend des moyens de nettoyage de l'orifice 5 lors de l'évacuation de la dose 3 usagée.

Une forme particulière des moyens d'évacuation est présentée aux figures qui illustrent la réalisation d'un poids 29 monté sur des moyens de suspension 30 autorisant l'introduction et la sortie du poids 29 dans l'orifice 5.

Le poids 29 présente une section de même forme et de dimensions peu inférieures à celles de la section de l'orifice 5.

De cette façon, le poids 29 est apte à racler les parois de l'orifice 5 évitant toute rémanence de produits à infuser.

On pourra notamment réaliser les moyens de suspension 30 de la façon suivante.

D'une part, une liaison pivot d'axe horizontal 31, est formée permettant au poids 29 d'osciller selon la position du plateau 4 tel que l'illustrent en vue de dessus les figures 3 à 5.

D'autre part, une articulation 32 également repérée en figure 1, permet la descente ou le relevage du poids 29 pour qu'il s'introduise et soit extrait de l'orifice 5.

La liaison pivot d'axe 31 peut être constituée entre un support 38 pour le poids et une patte 37 reliée au châssis 36 du groupe.

L'articulation 32 pourra être formée par la liaison entre la patte 37 et le châssis 36.

Ces liaisons cinématiques pourront être réalisées par des moyens courants, faisant notamment appel à des systèmes vissés.

Dans un mode préféré, une liberté de mouvement est en outre conférée pour le poids 29 vis à vis du support 38.

Pour ce faire, une liaison linéaire annulaire 35 est constituée afin de faciliter les mouvements d'introduction et de sortie de l'orifice 5.

Par exemple, la liaison linéaire annulaire est formée en réalisant un trou 40 sensiblement vertical dans le support 38 coopérant avec une tige 34 à l'extrémité inférieure de laquelle est fixée le poids 29 et monté sur le support 38 de telle sorte que la tête 39 de la tige 34 de section supérieure à celle du trou 40 s'applique sur le trou 40 par le dessus.

La tige 34 a ainsi la possibilité de translater verticalement relativement au support 38.

Pour faciliter les mouvements d'introduction et de sortie du poids 29 dans l'orifice 5, on utilisera préférentiellement un poids 29 dont le profil 33 est tronconique.

De cette façon, on pourra former un poids 29 dont la section maximale est très peu inférieure en dimension à celle de la section de l'orifice 5.

La forme du profil 33 tronconique est présentée aux différentes figures et notamment en figure 2.

Elle évite tout blocage du poids 29 dans l'orifice 5.

On décrit ci-après différentes étapes de fonctionnement du groupe selon l'invention dans le mode particulier de réalisation illustré aux figures et notamment aux figures 6 à 9.

En figure 6, on présente une phase d'introduction d'une dose 3 de produit à infuser dans la chambre d'infusion 1b au niveau de son réceptacle 2b.

Cette introduction est possible en positionnant le plateau mobile 4 de telle sorte que l'orifice 5 soit en regard du réceptacle 2b.

Par ailleurs, cette mise en position du plateau mobile 4 assure l'entraînement de l'entonnoir 17 qui vient également se positionner en regard de l'ouverture du réceptacle 2b.

A ce moment, l'ensemble d'approvisionnement 15 peut être mis en fonctionnement pour assurer le transfert du produit à infuser (tel du café moulu) dans la chambre d'infusion 1b.

Tel qu'illustré en figure 1, les moyens d'approvisionnement 15 pourront comporter plusieurs moulins 19 aptes à moudre du café en grains pour obtenir une mouture.

Lorsqu'une dose est ainsi introduite dans la chambre d'infusion 1b, celle-ci peut être fermée par une autre phase de rotation du plateau mobile 4.

Il est alors possible de se retrouver dans la position illustrée en figure 7 dans laquelle la chambre 1b est fermée et l'entonnoir 17 ainsi que le poids 29 ramené en position de repos correspondant sensiblement à la vue de dessus de la figure 3.

A cet instant, l'infusion peut être réalisée par une injection radiale d'eau chaude dans la chambre d'infusion 1b par le biais du circuit d'alimentation 7.

En figure 7, des flèches illustrent le passage de l'eau depuis le circuit d'alimentation 7 vers la sortie 41.

La boisson est ensuite récupérée de façon courante.

Avant d'entamer la phase d'infusion, le piston mobile 10 peut être remonté de façon à opérer un tassage du produit à infuser.

Lorsque l'infusion est terminée, il est possible d'éjecter la dose 3 usagée hors de la chambre d'infusion 1b tel que cela est représenté en figure 8.

Dans ce cadre, le plateau mobile 4 est positionné de façon à ce que l'orifice 5 soit en regard de l'ouverture du réceptacle 2b de la chambre d'infusion 1b.

Dès lors, le piston mobile 10 peut translater pour que la dose 3 soit récupérée dans l'orifice 5.

Une nouvelle rotation du plateau mobile 4 en sens inverse de la précédente permet l'évacuation de la dose 3 par simple gravité.

Cette étape d'évacuation est représentée en figure 9.

Dans ce cadre, le poids 29 facilitera l'évacuation et évitera toute rémanence de produits à infuser sur le pourtour de l'orifice 5.

Il est à noter que durant la réalisation de ces différentes étapes dans la chambre d'infusion 1b, la chambre d'infusion la peut également connaître un fonctionnement indépendant.

Ainsi, la figure 7 illustre la possibilité selon laquelle une infusion est simultanément réalisée dans la chambre 1b.

Cette infusion peut également se poursuivre durant les étapes de chargement de la chambre d'infusion 1b (figure 6), d'éjection de la dose usagée 3 (figure 8) et d'évacuation de la dose usagée 3 (figure 9).

De façon analogue, il est possible d'effectuer des phases de chargement, d'infusion, d'éjection et d'évacuation pour la chambre d'infusion 1a alors que la chambre d'infusion 1b est en fonctionnement.

On notera que suivant l'exemple présenté, les mouvements du plateau mobile 4 s'effectuent en rotation autour d'une position de repos illustrée en figure 3.

Le plateau mobile 4 est apte à être mis en rotation autour de cette position dans un sens ou dans l'autre suivant les opérations à effectuer vis à vis soit de la chambre d'infusion 1b, soit de la chambre d'infusion 1a.

De façon préférée, l'ensemble des cycles de fonctionnement du groupe est automatisé de façon à procurer une productivité et une facilité d'utilisation optimales à l'utilisateur.

Notamment, on voit que l'usage d'un tel cycle de fonctionnement évite la nécessité de doubler toutes les commandes de fonctionnement des chambres d'infusion 1a, 1b.

On pourra bien entendu prévoir des moyens de détection de la position du plateau mobile 4 afin que celui-ci s'arrête parfaitement dans les différentes positions souhaitées pour les phases de chargement de dose 3, d'évacuation, d'éjection et de fermeture des chambres 1a, 1b.

### REFERENCES

- 1a, 1b.: Chambres d'infusion
- 2a, 2b.: Réceptacle
- 3.: Dose
- 4.: Plateau mobile
- 5.: Orifice
- 6.: Joint d'étanchéité
- 7.: Circuit d'alimentation radiale
- 8.: Paroi latérale
- 9.: Paroi inférieure
- 10.: Piston
- 11.: Motorisation du piston
- 12.: Electrovanne d'infusion
- 13.: Axe de rotation du plateau
- 14.: Motorisation du plateau
- 15.: Ensemble d'approvisionnement
- 16.: Canal
- 17.: Entonnoir
- 18.: Extrémité inférieure
- 19.: Moulins
- 20.: Axe vertical
- 21.: Liaison pivot
- 22.: Ergot d'entraînement
- 23.: Partie annulaire
- 24.: Echancrure
- 25.: Axe de symétrie
- 26.: Première portion de la partie annulaire
- 27.: Deuxième portion de la partie annulaire
- 28.: Relief
- 29.: Poids
- 30.: Moyens de suspension
- 31.: Liaison pivot d'axe horizontal
- 32.: Articulation
- 33.: Profil tronconique
- 34.: Tige
- 35.: Liaison linéaire annulaire
- 36.: Châssis
- 37.: Patte
- 38.: Support
- 39.: Tête de la tige
- 40.: Trou
- 41.: Sortie
- 42.: Filtre

## Revendications

1. Groupe pour la fabrication de boissons par infusion d'une dose (3) d'un produit à infuser, comportant plusieurs chambres d'infusion (1a, 1b) juxtaposées dotées chacune d'un réceptacle (2a, 2b) pour la dose (3) et des moyens d'injection d'eau chaude dans chacune des chambres d'infusion, **caractérisé par le fait**
**que** les chambres d'infusion (1a, 1b) sont surmontées d'un plateau mobile (4) muni d'un orifice (5) apte à être placé en regard des chambres d'infusion (1a, 1b), permettant l'ouverture ou la fermeture des chambres (1a, 1b) selon sa position.

2. Groupe selon la revendication 1 **caractérisé par le fait**
**qu'**il présente un joint d'étanchéité (6) entre chaque chambre d'infusion (1a, 1b) et le plateau mobile (4).

3. Groupe selon l'une quelconque des revendications 1 ou 2 **caractérisé par le fait**
**que** les moyens d'injection sont constitués de circuits d'alimentation radiale (7) débouchant dans chaque chambre d'infusion (1a, 1b).

4. Groupe selon l'une quelconque des revendications 1 à 3 **caractérisé par le fait**
**que** la paroi inférieure (9) du réceptacle (2a, 2b) est réalisée par un piston (10) mobile en translation entre une position de réception de dose (3) et une position d'éjection de la dose (3) dans l'orifice (5) lorsqu'elle est usagée.

5. Groupe selon la revendication 4, **caractérisé par le fait**
**que** l'orifice (5) présente une section de forme identique et de dimensions légèrement supérieures à celles de l'ouverture des chambres d'infusion (1a, 1b).

6. Groupe selon la revendication 5 **caractérisé par le fait que**
- le pourtour de l'orifice (5) a une épaisseur au moins égale à la hauteur maximale de la dose (3) usagée éjectée après infusion,
- l'évacuation de la dose (3) usagée éjectée s'effectue par gravité après déplacement du plateau mobile (4).

7. Groupe selon l'une quelconque des revendications 1 à 6 **caractérisé par le fait que**
- le plateau (4) est un disque mobile en rotation dans un plan horizontal,
- ledit groupe comprend deux chambres d'infusion (1a, 1b) positionnées sous le plateau (4) de sorte qu'elles se trouvent sur la trajectoire de l'orifice (5).

8. Groupe selon la revendication 7 **caractérisé par le fait**
**qu'**il comprend des moyens automatiques de chargement d'une dose (3) de produit à infuser pourvus de :
- un ensemble d'approvisionnement (15) en produit à infuser débouchant sur au moins un canal d'approvisionnement (16),
- un entonnoir (17) apte à recevoir par gravité la dose (3) depuis le ou les canaux d'approvisionnement (16) et dont l'extrémité inférieure (18) débouche au niveau du plateau mobile (4),
- des moyens de positionnement de l'entonnoir (17) en regard de l'une ou l'autre des chambres d'infusion (1a, 1b), permettant le chargement d'une dose (3) dans l'une ou l'autre des chambres d'infusion (1a, 1b) lorsque l'orifice (5) est positionné en regard.

9. Groupe selon la revendication 8 **caractérisé par le fait**
**que** l'extrémité inférieure (18) de l'entonnoir (17) présente des formes et dimensions sensiblement correspondantes à celles de l'ouverture des chambres d'infusion (1a, 1b).

10. Groupe selon l'une quelconque des revendications 8 ou 9, **caractérisé par le fait que**
les moyens de positionnement de l'entonnoir (17) en regard de l'une ou l'autre des chambres d'infusion (1a, 1b) comportent :
- une liaison pivot (21) d'axe vertical (20) dotée de moyens de rappel,
- un ergot d'entraînement (22) fixé sur la paroi extérieure de l'entonnoir (17) coopérant avec une partie annulaire (23) sur le pourtour du plateau mobile (4) pour orienter l'entonnoir (17) suivant l'une des trois positions suivantes :
- une position au repos lorsque l'ergot d'entraînement (22) s'inscrit dans une échancrure (24) formée sur la partie annulaire (23), les chambres d'infusion (1a, 1b) étant disposées symétriquement de part et d'autre de la position de repos ;
- une position pivoté en regard de l'une des chambres d'infusion (1a, 1b) par appui de l'ergot d'entraînement (22) sur la portion (26) de la partie annulaire (23) située d'un premier côté de l'échancrure (24) ;
- une position pivoté en regard de l'autre des chambres d'infusion (1a, 1b) par appui de l'ergot d'entraînement (22) sur la portion (27) de la partie annulaire (23) située de l'autre côté de l'échancrure (24).

11. Groupe selon l'une quelconque des revendications 8 à 10 **caractérisé par le fait**
**qu'**il présente des moyens de mise en vibration de l'entonnoir (17) pour favoriser la descente du produit à infuser.

12. Groupe selon la revendication 11 en combinaison avec la revendication 10 **caractérisé par le fait**
**qu'**au moins une zone de chaque portion (26, 27) de la partie annulaire (23) présente un relief (28) pour mettre en vibration l'entonnoir (17) au passage de l'ergot d'entraînement (22).

13. Groupe selon la revendication 6 en combinaison avec l'une quelconque des revendications 7 à 12 **caractérisé par le fait**
**qu'**il comprend des moyens de nettoyage de l'orifice (5) lors de l'évacuation de la dose (3) usagée, constitués :
- d'un poids (29) dont la section est de même forme et de dimensions peu inférieures à celles de la section de l'orifice (5),
- de moyens de suspension (30) du poids (29) autorisant son introduction dans l'orifice (5) et sa sortie.

14. Groupe selon la revendication 13 **caractérisé par le fait que**
les moyens de suspension (30) comportent :
- une liaison pivot d'axe horizontal (31),
- une articulation (32) de descente ou de relevage du poids (29),
permettant l'introduction ou la sortie du poids (29) dans l'orifice (5) lors du déplacement du plateau mobile (4).

15. Groupe selon la revendication 14 **caractérisé par le fait**
**que** le poids (29) a un profil (33) tronconique afin de faciliter ses mouvements d'introduction ou de sortie de l'orifice (5).

16. Groupe selon l'une quelconque des revendications 14 ou 15 **caractérisé par le fait**
**que** le poids (29) est monté sur une tige (34) reliée à liaison pivot d'axe horizontal (31) par une liaison linéaire annulaire (35), afin de faciliter ses mouvements d'introduction ou de sortie de l'orifice (5).

17. Machine automatique pour la fabrication de boissons ou café du type expresso **caractérisée par le fait**
**qu'**elle intègre au moins un groupe selon l'une quelconque des revendications 1 à 16.

## Patentansprüche

1. Aggregat zur Herstellung von Getränken durch Brühen einer Kapsel (3) mit einem zu brühenden Produkt, bestehend aus mehreren nebeneinander angeordneten Brühkammern (1a, 1b), die jede eine Aufnahmeöffnung (2a, 2b) für die Kapsel (3) sowie Einspritzvorrichtungen für warmes Wasser besitzen, und das **gekennzeichnet ist dadurch**,
daß sich über den Brühkammern (1a, 1b) eine mobile Platte (4) befindet, mit einer Öffnung (5), die gegenüber den Brühkammern (1a, 1b) positioniert werden kann und das Öffnen oder Schließen der Brühkammern (1a, 1b) entsprechend ihrer Stellung ermöglicht.

2. Aggregat gemäß Anspruch 1, **gekennzeichnet dadurch,**
**daß** zwischen jeder Brühkammer (1a, 1b) und der mobilen Platte (4) eine Dichtung (6) vorhanden ist.

3. Aggregat gemäß einem der beiden Ansprüche 1 oder 2, **gekennzeichnet dadurch,**
**daß** die Einspritzvorrichtungen aus radial angeordneten Zuleitungen (7) bestehen, die in jede Brühkammer (1a, 1b) münden.

4. Aggregat gemäß einem der Ansprüche 1 bis 3, **gekennzeichnet dadurch,**
**daß** der Boden (9) der Aufnahmeöffnung (2a, 2b) durch einen Kolben (10) gebildet wird ist, der sich geradlinig zwischen einer Aufnahmeposition der Kapsel (3) und einer Position zum Auswurf der verbrauchten Kapsel (3) in die Öffnung (5) verschieben lässt.

5. Aggregat gemäß Anspruch 4, **gekennzeichnet dadurch,**
**daß** die Öffnung (5) im Querschnitt die gleiche Form, jedoch etwas größere Abmessungen hat, als die Öffnung der Brühkammem (1a, 1b).

6. Aggregat gemäß Anspruch 5, **gekennzeichnet dadurch,**
- **daß** der Umfang der Öffnung (5) mindestens die gleiche Dicke hat, wie die maximale Höhe der nach dem Brühen verbrauchten und ausgestoßenen Kapsel (3),
- **daß** das Ausstoßen der verbrauchten Kapsel (3) nach der Weiterbewegung der beweglichen Platte (4) durch Schwerkraft erfolgt.

7. Aggregat gemäß einem der Ansprüche 1 bis 6, **gekennzeichnet dadurch,**
- **daß** die Platte (4) eine in horizontaler Ebene drehbare Scheibe ist,
- **daß** das Aggregat zwei Brühkammern (1a, 1b) besitzt, die so unter der Platte (4) angeordnet sind, daß sie sich in der von der Öffnung (5) vorgegebenen Bahn befinden.

8. Aggregat gemäß Anspruch 7, **gekennzeichnet dadurch, daß** es automatische Vorrichtungen zum Laden einer Kapsel (3) des zu brühenden Produkts aufweist, die folgende Komponenten besitzen:
- eine Beschickungseinrichtung (15) für das zu brühende Produkt, die in mindestens einen Beschickungskanal (16) mündet,
- einen Trichter (17), der die durch Schwerkraft zugeführte Kapsel (3) aus dem bzw. den Beschickungskanälen (16) aufnehmen kann und dessen unteres Ende (18) auf Ebene der mobilen Platte (4) mündet,
- Mittel zur Positionierung des Trichters (17) gegenüber der einen oder anderen Brühkammer (1a, 1b), was das Laden einer Kapsel (3) in der einen oder anderen Brühkammer (1a, 1b) ermöglicht, wenn die Öffnung (5) ihr gegenüber positioniert wurde.

9. Aggregat gemäß Anspruch 8, **gekennzeichnet dadurch,**
**daß** das untere Ende (18) des Trichters (17) in Form und Abmessungen der Öffnung der Brühkammern (1a, 1b) sehr ähnlich ist.

10. Aggregat gemäß einem der Ansprüche 1 oder 9, **gekennzeichnet dadurch,**
**daß** die Mittel zur Positionierung des Trichters (17) gegenüber der einen oder anderen Brühkammer (1a, 1b) folgende Elemente aufweisen:
- ein Schwenkgelenk (21) für die senkrechte Achse (20) mit Rückholeinrichtungen
- ein Mitnehmer (22), der an der äußeren Wand des Trichters (17) befestigt ist und mit einem ringförmigen Teil (23) am Umfang der mobilen Platte (4) zusammenwirkt, um den Trichter (17) in eine der drei folgenden Positionen zu bewegen:
- eine Ruhestellung, wenn der Mitnehmer (22) in eine der Ausnehmungen (24) eingreift, die im ringförmigen Teil (23) ausgebildet sind, wobei die Brühkammern (1a, 1b) symmetrisch auf jeder Seite der Ruhestellung angeordnet sind,
- eine ausgeschwenkte Position gegenüber einer der Brühkammern (1a, 1b), durch Druck des Mitnehmers (22) auf eine Partie (26) des ringförmigen Teils (23) auf einer Seite der Ausnehmung (24),
- eine ausgeschwenkte Position gegenüber der anderen Brühkammer (1a, 1b), durch Druck des Mitnehmers (22) auf eine Partie (27) des ringförmigen Teils (23) auf der anderen Seite der Ausnehmung (24).

11. Aggregat gemäß einem der Ansprüche 8 bis 10, **gekennzeichnet dadurch,**
**daß** es Einrichtungen zum Vibrieren des Trichters (17) besitzt, um die Abwärtsbewegung des zu brühenden Produkts zu unterstützen.

12. Aggregat gemäß Anspruch 11, zusammen mit Anspruch 10, **gekennzeichnet dadurch,**
**daß** mindestens eine Zone jeder Partie (26, 27) des ringförmigen Teils (23) ein Relief (28) aufweist, mit dem der Trichter (17) beim Passieren des Mitnehmers (22) in Vibration versetzt werden kann.

13. Aggregat gemäß Anspruch 6, zusammen mit einem der Ansprüche 7 bis 12, **gekennzeichnet dadurch,**
**daß** es Einrichtungen zur Reinigung der Öffnung (5) beim Ausstoßen der benutzten Kapsel (3) besitzt, die aus folgenden Elementen bestehen:
- ein Gewicht (29) dessen Querschnitt die gleiche Form und etwas kleinere Abmessungen hat, wie der Querschnitt der Öffnung (5),
- eine Aufhängung (30) des Gewichts (29), welche dessen Einführung in die Öffnung (5) und das Ausstoßen ermöglicht.

14. Aggregat gemäß Anspruch 13, **gekennzeichnet dadurch,**
**daß** die Aufhängung (30) folgende Elemente aufweist:
- eine schwenkbar gelagerte horizontale Achse (31),
- ein Gelenk (32) zum Absenken oder Hochziehen des Gewichts (29), wodurch das Gewicht (29) während der Bewegung der mobilen Platte (4) in die Öffnung (5) hinein- oder hinausgeführt werden kann.

15. Aggregat gemäß Anspruch 14, **gekennzeichnet dadurch,**
**daß** das Gewicht (29) ein kegelstumpfartiges Profil (33) besitzt, um die Ein- und Ausfahrbewegungen in bzw. aus der Öffnung (5) zu erleichtern.

16. Aggregat gemäß einem der Ansprüche 14 oder 15, **gekennzeichnet dadurch,**
**daß** das Gewicht (29) auf einer Stange (34) montiert ist, die mit der schwenkbar gelagerten Achse (31) über ein lineares, ringförmiges Verbindungselement (35) verbunden ist, um die Ein- und Ausfahrbewegung in bzw. aus der Öffnung (5) zu erleichtern.

17. Automatisch arbeitende Maschine zur Herstellung von Getränken oder Expresso-Kaffee, **gekennzeichnet dadurch,**
**daß** sie mindestens ein Aggregat gemäß einem der Ansprüche 1 bis 16 enthält.

## Claims

1. Drink-making unit by the infusion of a dose (3) of a product, and comprising several infusion chambers (1a, 1b) positioned side by side, each one equipped with a receptacle (2a, 2b) for receiving dose (3) and means for injecting hot water into each of the infusion chambers, **characterised in that**
above infusion chambers (1a, 1b) is positioned a mobile plate (4) with an orifice (5) that can be aligned opposite infusion chambers (1a, 1b) so that chambers (1a, 1b) open or close depending on its position.

2. Unit according to claim 1 **characterised in that**
there is a seal (6) between each infusion chamber (1a, 1b) and the mobile plate (4).

3. Unit according to any one of claims 1 or 2 **characterised in that**
means for injecting liquid consist of radial circuits (7) supplying each infusion chamber (1a, 1b).

4. Unit according to any one of claims 1 to 3 **characterised in that**
lower wall (9) of receptacle (2a, 2b) is formed by a piston (10) that translates between a position for receiving a new dose (3) and a position for ejecting a spent dose (3) into orifice (5).

5. Unit according to claim 4, **characterised in that**
orifice (5) has a section of identical shape and dimensions but slightly larger than those of openings of infusion chambers (1a, 1b).

6. Unit according to claim 5 **characterised in that**
the surround of orifice (5) is at least as thick as the maximum thickness of spent dose (3) that is ejected after the infusion operation,
spent dose (3) is ejected by gravity after movement of mobile plate (4).

7. Unit according to any one of claims 1 to 6 **characterised in that**
plate (4) is a mobile disk rotating in the horizontal plane,
the said unit comprises two infusion chambers (1a, 1b) positioned below plate (4) so that these are aligned on orifice (5).

8. Unit according to claim 7 **characterised in that**
it includes automatic means for loading a dose (3) of the product to be infused, these means being equipped with:
an unit (15) supplying the product to be infused and opening into at least one feed channel (16),
a funnel (17) capable of receiving dose (3) by gravity from feed channel(s) (16) and whose bottom end (18) opens at mobile plate (4),
means for positioning funnel (17) on one or the other of infusion chambers (1a, 1b), so that a dose (3) can be loaded into one or the other of infusion chambers (1a, 1b) when orifice (5) is aligned opposite it.

9. Unit according to claim 8 **characterised in that**
lower end (18) of funnel (17) has shapes and dimensions that correspond roughly to openings of infusion chambers (1a, 1b).

10. Unit according to any one of claims 8 or 9 **characterised in that**
the means for aligning funnel (17) opposite one or the other of infusion chambers (1a, 1b) comprise:
- a pivot (21) with vertical pin (20) and return means,
- a drive pin (22) fixed on the outer wall of funnel (17) acting with an annular part (23) around mobile plate (4) so as to orient funnel (17) onto one of the three following positions:
- a rest position when drive pin (22) is in a recess (24) on annular part (23), infusion chambers (1a, 1b) being arranged symmetrically on either side of the rest position;
- a pivoted position aligned on one of infusion chambers (1a, 1b) by drive pin (22) bearing on section (26) of annular part (23) situated on a first side of recess (24);
- a pivoted position aligned on the other one of the infusion chambers (1a, 1b) by drive pin (22) bearing on section (27) of the annular part (23) situated on the other side of recess (24).

11. Unit according to any one of claims 8 to 10 **characterised in that**
it has means for vibrating funnel (17) in order to help the product to be infused to drop.

12. Unit according to claim 11 in combination with claim 10 **characterised in that**
at least one zone of each section (26, 27) of annular part (23) has a raised feature (28) for vibrating funnel (17) on passage of drive pin (22).

13. Unit according to claim 6 in combination with any one of claims 7 to 12 **characterised in that**
it includes the means for cleaning orifice (5) on evacuating spent dose (3) consisting of:
- a weight (29), the section of which has the same shape and slightly smaller dimensions than orifice (5),
- means for suspending (30) weight (29) so that it inserts and extracts from orifice (5).

14. Unit according to claim 13 **characterised in that**
suspension means (30) comprise:
- a horizontal pivot (31),
- a hinge (32) for lowering or raising weight (29),
thereby allowing the insertion or the extraction of weight (29) from orifice (5) when mobile plate (4) moves.

15. Unit according to claim 14 **characterised in that**
weight (29) has a conical section (33) that ensures easier insertion or removal from the orifice (5).

16. Unit according to any one of claims 14 or 15 **characterised in that**
weight (29) is fitted on stem (34) connected to horizontal pivot (31) by an annular linear connection (35), that ensure easier insertion and extraction from orifice (5).

17. Automatic machine for making drinks such as expresso coffee, **characterized in that**
it integrates at least one assembly according to any one of claims 1 to 16.
